# EUROPEAN PATENT SPECIFICATION

(11) **EP 2 056 068 B1**
(45) Date of publication and mention of the grant of the patent: **14.11.2012**
(21) Application number: 07792698.8
(22) Date of filing: 20.08.2007
(51) Int. Cl.: G01C 19/574, H01L 41/08

(54) **INERTIA FORCE SENSOR**
TRÄGHEITSKRAFTSENSOR
CAPTEUR DE FORCE D'INERTIE

(30) Priority: 21.08.2006 JP 2006223807
(43) Date of publication of application: 06.05.2009
(73) Proprietor: Panasonic Corporation, Kadoma-shi Osaka 571-8501 (JP)
(72) Inventor: OHUCHI, Satoshi, c/o Panasonic Corp., IPROC,IP, Shiromi 2-chome, Chuo-ku, Osaka-shi, Osaka (JP); AIZAWA, Hiroyuki, c/o Panasonic Corp., IPROC,IP, Shiromi 2-chome, Chuo-ku, Osaka-shi, Osaka (JP)
(74) Representative: Pautex Schneider, Nicole Véronique
(86) International application number: PCT/JP2007/066084
(87) International publication number: WO 2008/023653

(56) References cited:
- EP-A1- 1 860 402
- EP-A2- 0 939 296
- EP-A2- 1 099 930
- WO-A1-96/27135
- GB-A- 2 370 119
- JP-A- 09 105 634
- JP-A- 09 178 492
- JP-A- 2001 082 963
- JP-A- 2004 301 510
- JP-A- 2006 030 125
- JP-A- 2006 162 313
- US-A- 6 119 518
- US-A1- 2003 011 283
- US-B1- 6 520 015

## Description

### TECHNICAL FIELD

The present invention relates to an angular velocity sensor for detecting angular velocity, which is used in various electronic devices for attitude control or navigation of mobile objects such as aircrafts, automobiles, robots, marine vehicles, and other vehicles.

### BACKGROUND ART

Conventional angular velocity sensors detect angular velocity by vibrating detection elements that can be formed in different shapes such as tuning-fork-shape, H-shape, or T-shape, and by electrically detecting distortions of the detection elements caused by the Coriolis force.

In a case where a vehicle is placed in the x-y plane when x, y, and z are orthogonal axes, angular velocity sensors used in a navigation system require detecting angular velocities around the x and z axes of the vehicle.

Conventionally, angular velocities of a plurality of axes (X, Y, and Z axes) are detected by using the same number of angular velocity sensors. In order to detect the angular velocity around the z axis, a detection element is arranged along the y-x plane.

Such a conventional technique related to the present invention is shown, for example, in Patent Document 1 below.

In the above structure, the detection of the angular velocities of a plurality of axes requires an electronic device to secure an area for mounting a plurality of angular velocity sensors having detection elements along the respective axes. This structure hinders the miniaturization of the electronic device in which the inertia force sensor is installed.
Patent Document 1: Japanese Patent Unexamined Publication No.2001-208546

US 6,119,518 discloses an angular velocity sensor having a weight part by etching a semiconductor substrate. In this structure, as the weight part is formed at a location extended from vibrating forks, utilization efficiency of the costly semiconductor substrate is low, and, as the structure is formed by an etching process, the process takes long time. Accordingly, the price of the sensor becomes high.

WO 96/27137 Al discloses an angular rate sensor having an inertia mass in middle of the sensor, which is formed by etching a single crystal substrate. One sensor frame is supported by coaxial torsion bars, and the frame is driven by one supporting beam, while the vibration is detected through another beam. In this structure, as the whole sensor structure is formed by etching a single crystal substrate, utilization efficiency of the more costly single crystal substrate is low. Moreover, even though the sensor can detect only one directional angular velocity, the price of the sensor becomes very high, because it utilizes extremely expensive single crystal substrate.

US 6,520,015 discloses a tuning fork gyroscope comprising a driver and a detector as extra devices. As the sensor material itself is an elastic material, the sensor cost is not extremely high, however, a production cost becomes high because the sensor is formed by micromachining process that needs very precise machining technology. Further, the total sensor structure becomes large because it includes extra driving and detecting devices, even though the gyroscope can detect only one directional angular velocity.

### SUMMARY OF THE INVENTION

An object of the present invention is to provide an angular velocity sensor which can detect angular velocities of a plurality of axes, making it unnecessary for an electronic device to secure an area for mounting a plurality of angular velocity sensors having detection elements, thereby reducing the size of the electronic device.

The invention is an inertia force sensor according to claim 1.

In the present invention, a detection element includes two orthogonal arms each formed by connecting one first arm substantially orthogonally to two second arms. The detection element further includes a support portion, two fixing arms, and weight parts. The support portion supports the two first arms. The two fixing arms are each connected to the support portion and fixed to a mounting substrate. The weight parts are connected to the ends of the four second arms. The weight parts include recesses to which the ends of the second arms are connected. The second arms are bent to face the weight parts. The weight parts are driven and vibrated in the direction in which the second arms face each other.

It is assumed that the first arms and the second arms are disposed in the x- and y-axis directions, respectively, when x, y, and z are orthogonal axes. Driving and vibrating the weight parts in the x-axis direction can make the second arms have distortions due to the angular velocities generated around the y or z axis. Detecting these distortions results in the detection of the angular velocities around the x, y, and z axes. Therefore, in order to detect angular velocities of a plurality of axes, the electronic device is not required to secure an area for mounting a plurality of angular velocity sensors having detection elements. In other words, the electronic device is only required to secure an area for mounting a single detection element, thereby being miniaturized.

### BRIEF DESCRIPTION OF THE DRAWINGS

Fig. 1 is a perspective view of a detection element of an angular velocity sensor according to an embodiment of the present invention.
Fig. 2 shows an operating condition of the detection element of the angular velocity sensor according to the embodiment of the present invention.
Fig. 3 shows changes in the resonant frequency due to the depth of recesses in weight parts and the length of the weight parts of the detection element of the angular velocity sensor according to the embodiment of the present invention.

### REFERENCE MARKS IN THE DRAWINGS

- 1: detection element
- 2: first arm
- 4: second arm
- 6: support portion
- 8: fixing arm
- 9: fixing portion
- 10: third arm
- 11: weight parts
- 12: recess
- 16: opposing portion
- 17: first driving portion
- 17a: first driving electrode portion
- 17b: second driving electrode portion
- 18: second driving portion
- 18a: third driving electrode portion
- 18b: fourth driving electrode portion
- 19: first sensing portion
- 19a: first sensing electrode portion
- 19b: second sensing electrode portion
- 20: second sensing portion
- 20a: third sensing electrode portion
- 20b: fourth sensing electrode portion

### DETAILED DESCRIPTION OF PREFERRED EMBODIMENT

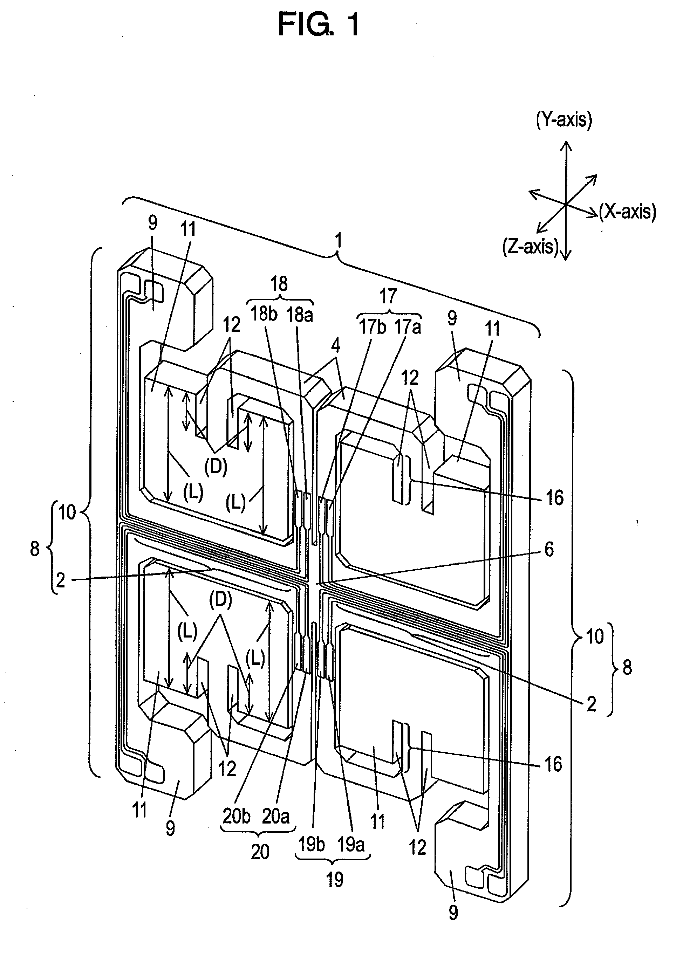

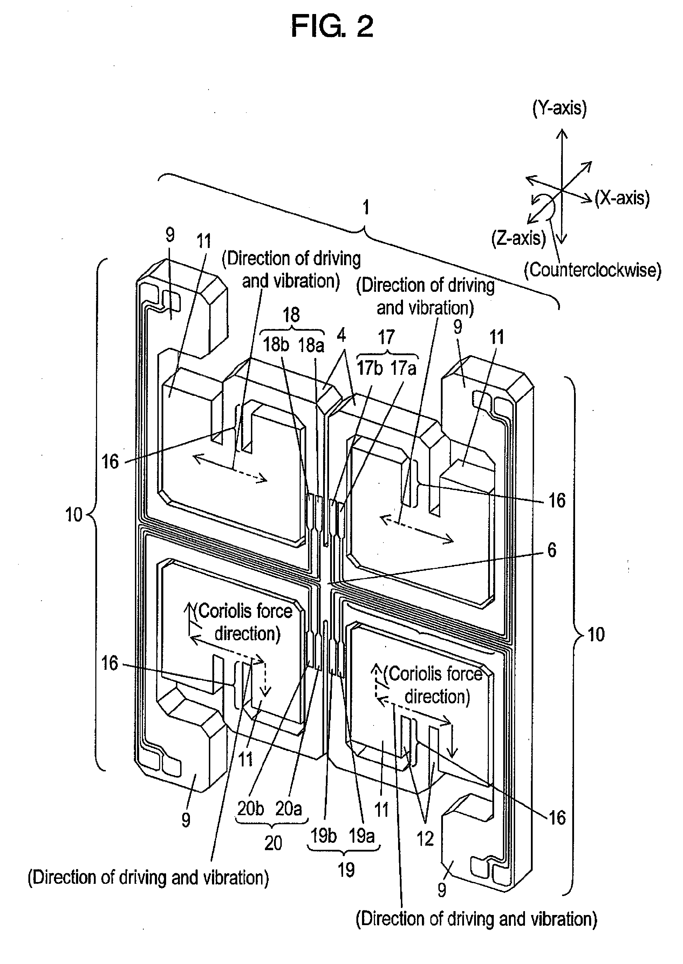

Fig. 1 is a perspective view of a detection element of an angular velocity sensor as one type of inertia force sensor according to an embodiment of the present invention. Fig. 2 shows an operating condition of the detection element of the angular velocity sensor.

As shown in Fig. 1, the angular velocity sensor includes detection element 1 for detecting angular velocity. Detection element 1 includes two orthogonal arms each formed by connecting one first arm 2 substantially orthogonally to two second arms 4. Detection element 1 further includes support portion 6 and fixing arms 8. Support portion 6 supports two first arms 2. Fixing arms 8 are orthogonal arms formed by connecting first arms 2 substantially orthogonally to third arms 10. First arms 2 and support portion 6 are arranged substantially in a straight line. First arms 2 are connected at one end thereof to support portion 6 and at the other end thereof to third arms 10. Detection element 1 is fixed to mounting substrate (not illustrated) at fixing portions 9 formed at both ends of each of third arms 10. Four fixing portions 9 may be connected so as to arrange third arms 10 in a frame shape.

Second arms 4 include opposing portions 16 formed by bending second arms 4 to face the main portions thereof, and the ends of second arms 4 are connected to weight parts 11. Weight parts 11 include recesses 12 to which the ends of second arms 4 are connected. Recesses 12 of weight parts 11 have a depth (D), which is 0.25 times to 0.4 times the length (L) of weight parts 11.

In Fig. 1, two opposite ones of four second arms 4 are provided near support portion 6 with first and second driving portions 17 and 18, respectively, for driving and vibrating weight parts 11 connected thereto. The other two opposite ones of four second arms 4 are provided near support portion 6 with first and second sensing portions 19 and 20, respectively, for detecting distortions of the two second arms 4.

First and second driving portions 17 and 18 are electrode portions for driving weight parts 11 connected to the two second arms 4. First driving portion 17 is formed of first and second driving electrode portions 17a and 17b facing each other, whereas second driving portion 18 is formed of third and fourth driving electrode portions 18a and 18b facing each other. First to fourth driving electrode portions 17a, 17b, 18a, and 18b are each formed of upper and lower electrodes (both not shown) with a piezoelectric body (not shown) interposed therebetween.

First and second sensing portions 19 and 20 are electrode portions for detecting distortions of the two second arms 4. First sensing portion 19 is formed of first and second sensing electrode portions 19a and 19b facing each other, whereas second sensing portion 20 is formed of third and fourth sensing electrode portions 20a and 20b facing each other. First to fourth sensing electrode portions 19a, 19b, 20a, and 20b are each formed of upper and lower electrodes with a piezoelectric body interposed therebetween.

First to fourth driving electrode portions 17a, 17b, 18a, and 18b, and first to fourth sensing electrode portions 19a, 19b, 20a, and 20b are produced as follows. First, a platinum (Pt) lower electrode is formed on a silicon substrate by radio frequency sputtering. Then, a lead zirconate titanate (PZT) piezoelectric body is formed on the lower electrode by radio frequency sputtering. Finally, a gold (Au) upper electrode is deposited on the PZT piezoelectric body.

Fig. 2 shows an operating condition of detection element 1 of the angular velocity sensor as one type of inertia force sensor according to the embodiment of the present invention. As shown in Fig. 2, first arms 2 and second arms 4 of detection element 1 are disposed in the x⁻ and y-axis directions, respectively, when x, y, and z are orthogonal axes. When an AC voltage at the resonant frequency is applied to first to fourth driving electrode portions 17a, 17b, 18a, and 18b, second arms 4 start to drive and vibrate, starting from the second arms 4 that have first and second driving portions 17 and 18 thereon. Weight parts 11 also start to drive and vibrate in the direction in which second arms 4 face each other (that is, in the direction of driving and vibration shown by the solid arrows and the dotted arrows). After all, four second arms 4 and four weight parts 11 synchronously drive and vibrate in the direction in which second arms 4 face each other. The direction of driving and vibration in detection element 1 correspond to the x-axis direction.

When angular velocity is generated counterclockwise in the z axis, Coriolis force is generated synchronously with the driving and vibration of weight parts 11. The Coriolis force is generated in the direction perpendicular to the direction of driving and vibrating weight parts 11 (that is, in the Coriolis force direction shown by the solid and dotted arrows). As a result, second arms 4 can cause distortions due to the angular velocity generated counterclockwise in the z axis. The Coriolis force direction of detection element 1 corresponds to the y-axis direction.

When the Coriolis force is generated in the Coriolis force direction shown by the solid arrows, first and third sensing electrode portions 19a and 20a detect contraction of the second arms 4 that have the sensing electrode portions 19a and 20a thereon, whereas second and fourth sensing electrode portions 19b and 20b detect expansion of the second arms 4 that have the sensing electrode portions 19b and 20b thereon. On the other hand, when the Coriolis force is generated in the Coriolis force direction shown by the dotted arrows, the first to fourth sensing electrode portions detect expansion and contraction in the opposite directions. First to fourth sensing electrode portions 19a, 19b, 20a, and 20b output voltages according to the detected expansion and contraction, so that angular velocities are detected based on the output voltages.

On the other hand, when angular velocity is generated clockwise in the z axis, second arms 4 expand and contract in the opposite direction to the case where angular velocity is generated counterclockwise in the z axis. First to fourth sensing electrode portions 19a, 19b, 20a, and 20b detect the expansion and contraction, so that angular velocities are detected in the same manner as above.

When angular velocity is generated around the y axis, Coriolis force is generated synchronously with the driving and vibration of weight parts 11. The Coriolis force is generated in the direction (in the z-axis direction) perpendicular to the direction of driving and vibration of weight parts 11. As a result, second arms 4 can cause distortions due to the angular velocity generated around the y axis. First to fourth sensing electrode portions 19a, 19b, 20a, and 20b detect the expansion and contraction of second arms 4, so that angular velocities are detected.

The distortions due to the angular velocity generated around the Z or y axis are also generated in the second arms 4 that have first to fourth driving electrode portions 17a, 17b, 18a, and 18b thereon. Therefore, first to fourth sensing electrode portions 19a, 19b, 20a, and 20b can be also arranged on the second arms 4 that have first to fourth driving electrode portions 17a, 17b, 18a, and 18b.

It is assumed as described above that first arms 2 and second arms 4 are disposed in the x- and y-axis directions, respectively, when x, y, and z are orthogonal axes. Driving and vibrating weight parts 11 in the direction in which second arms 4 face each other can make second arms 4 have distortions due to the angular velocity generated around the y or z axis. Detecting these distortions results in the detection of the angular velocities around the x, y, and z axes. Therefore, in order to detect angular velocities of a plurality of axes, the electronic device is not required to secure an area for mounting a plurality of angular velocity sensors having detection elements. In other words, the electronic device is only required to secure an area for mounting a single detection element, thereby being miniaturized.

Weight parts 11 include recesses 12 to which the ends of second arms 4 are connected. Second arms 4 are bent to face weight parts 11, and weight parts 11 are driven and vibrated in the direction in which second arms 4 face each other. As a result, the drive frequency can be reduced. Weight parts 11 vibrate while dangling from second arms 4.

In general, the drive frequency is set to the resonant frequency of detection element 1, and as the resonant frequency becomes larger, the sensitivity decreases. The above structure can keep weight parts 11 dangling from second arms 4 and reduce the resonant frequency of detection element 1, thereby reducing the drive frequency of second arms 4. This makes it easy to create the topological design of the circuit, thereby improving the sensitivity.

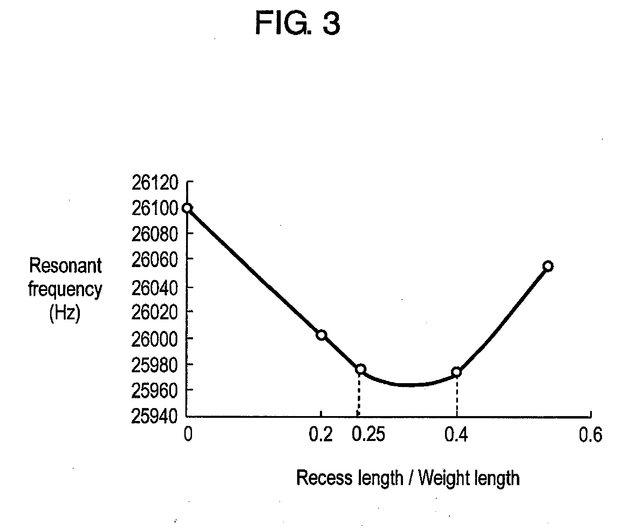

Fig. 3 shows changes in the resonant frequency due to the depth (D) of recesses 12 in weight parts 11 and the length (L) of weight parts 11 of detection element 1 of Fig. 1. As apparent from Fig. 3, the depth (D) of recesses 12 in weight parts 11 is preferably 0.25 times to 0.4 times the length (L) of weight parts 11. This is because within this range, the resonant frequency is close to its minimum. The drive frequency can be further reduced so as to improve the sensitivity by providing all the arms of detection element 1 with the lower electrode and the piezoelectric body, which are components of first and second driving portions 17, 18 and first and second sensing portions 19, 20.

Reducing the width of second arms 4 results in a further reduction in the resonant frequency of the second arms 4 that have first and second sensing portions19 and 20, thereby further reducing the drive frequency.

### INDUSTRIAL APPLICABILITY

The inertia force sensor according to the present invention can detect inertia forces of a plurality of axes, thereby being applicable to various electronic devices.

## Claims

1. An inertia force sensor comprising:
a planar detection element (1), for detecting an inertia force, the detection element (1) including:
two fixing arms (8), each having a third arm (10), each of which comprises fixing portions (9), which are fixable to a mounting substrate, one at each end of said third arm (10), each of said fixing arms (8), further including a first arm (2), which is connected perpendicularly with one of its ends, to the respective third arm (10) at a location substantially in the middle of each respective one of said third arms (10) and, with its other end to a central support portion (6),
said third arms (10) extending in a first (Y) of two perpendicular directions defining said (X-Y) plane and said first arm (2) extending in the other (X) direction of said two perpendicular directions,
said first arms (2) being arranged, with said central support portion (6) in between them, in a straight line perpendicular to said third arms (10),
said central support member (6) being further connected to two pairs of second arms (4) opposite to each other, each having first portions extending away from said central support member (6) in or opposite to said first (Y) direction and being bent, respectively, forming a second portion extending from said first portion of each second arm in said other (X) direction, said second arms (4) being subsequently bent again forming third portions (16), extending in parallel to said first portions, and toward said first arms (2), such that the two second arms of each of the pairs are symmetric with respect to a plane normal to the other (x) direction and passing through the center of the support portion
said third portions (16) of each of said second arms (4) being connected to one of four weight parts (11),
**characterized in that**
each of the four weight parts (11) has substantially rectangular shape on the (X-Y) plane, one side of the rectangular shape has a substantially rectangular shaped recess (12) having a depth, and each of the third portions (16) is connected to a bottom of the recess (12), and
D/L is in a range 0.25 to 0.4
where D is a depth of the recess (12) and L is a distance between the side of the weight part (11) where the recess (12) is formed, and a side of the weight part (11) that opposes the side where the recess (12) is formed.

2. The inertia force sensor of claim 1, wherein
one of the pairs of second arms (4) connected linearly via the central support portion (6) include driving portions (17, 18) for driving and vibrating the weight parts (11) at their first portions.
the other the other pairs of second arms 4 connected linearly via the central support section (6) include sensing portions (19, 20) for detecting distortions of the second arms (4) at their first portions; and
the driving portions (17, 18) and sensing portions (19, 20) are each formed of an upper electrode and a lower electrode with a piezoelectric body interposed therebetween.

3. The inertia force sensor of claim1, wherein
one of the pairs of second arms (4) connected linearly via the central support portion (6) include driving portions (17, 18) for driving and vibrating the weight parts (11) and sensing portions (19, 20) for detecting distortions of the second arms (4) at their first portions and
the driving portions (17, 18) and sensing portions (19, 20) are each formed of an upper electrode and a lower electrode with a piezoelectric body interposed therebetween.

## Patentansprüche

1. Trägheitskraftsensor, der Folgendes umfasst:
ein planares Erfassungselement (1) zum Erfassen einer Trägheitskraft, welches Folgendes umfasst:
zwei Fixierarme (8), die jeweils einen dritten Arm (10) aufweisen, der jeweils Fixierabschnitte (9) umfasst, die an einem Montagesubstrat fixiert werden können, und zwar einer an jedem Ende des dritten Arms (10), wobei jeder Fixierarm (8) ferner einen ersten Arm (2) umfasst, der senkrecht mit einem seiner Enden an einer Stelle, die im Wesentlichen in der Mitte des jeweiligen dritten Arms (10) liegt, mit dem jeweiligen dritten Arm (10) und mit seinem anderen Ende mit einem mittigen Trägerabschnitt (6) verbunden ist,
wobei die dritten Arme (10) in einer ersten (Y) von zwei senkrechten Richtungen verlaufen, welche die (X-Y-) Ebene definieren, und der erste Arm (2) in der anderen (X) der beiden senkrechten Richtungen verläuft,
wobei die ersten Arme (2) mit dem mittigen Trägerabschnitt (6) dazwischen in einer geraden Linie angeordnet sind, die senkrecht zu den dritten Armen (10) verläuft,
wobei das mittige Trägerelement (6) ferner mit zwei Paar zweiten Armen (4) verbunden ist, die einander gegenüberliegen und jeweils erste Abschnitte aufweisen, die von dem mittigen Trägerelement (6) aus in die erste (Y-) Richtung oder dieser entgegen verlaufen und jeweils gekrümmt sind, so dass ein zweiter Abschnitt gebildet wird, der von dem ersten Abschnitt jedes zweiten Arms aus in die andere (X-) Richtung verläuft, wobei die zweiten Arme (4) danach wieder gekrümmt sind und dritte Abschnitte (16) bilden, die parallel zu den ersten Abschnitten zu den ersten Armen (2) hin verlaufen, so dass die beiden zweiten Arme jedes Paars zu einer Ebene symmetrisch sind, die lotrecht zu der anderen (X-) Richtung und durch die Mitte des Trägerabschnitts verläuft,
wobei die dritten Abschnitte (16) jedes zweiten Arms (4) mit einem von vier Gewichtsteilen (11) verbunden sind,
**dadurch gekennzeichnet, dass**
jedes der vier Gewichtsteile (11) eine im Wesentlichen rechteckige Form auf der (X-Y-) Ebene aufweist, eine Seite der rechteckigen Form eine im Wesentlichen rechteckige Aussparung (12) mit einer Tiefe aufweist und jeder der dritten Abschnitte (16) mit einem Boden der Aussparung (12) verbunden ist und
D/L im Bereich von 0,25 bis 0,4 liegt,
wobei D eine Tiefe der Aussparung (12) und L ein Abstand zwischen der Seite des Gewichtsteils (11), an der die Aussparung (12) ausgebildet ist, und einer Seite des Gewichtsteils (11) ist, die der Seite mit der daran ausgebildeten Aussparung (12) gegenüberliegt.

2. Trägheitskraftsensor nach Anspruch 1, bei dem
eines der Paare zweiter Arme (4), die linear über den mittigen Trägerabschnitt (6) verbunden sind, Ansteuerabschnitte (17, 18) zum Ansteuern und Vibrierenlassen der Gewichtsteile an ihren ersten Abschnitten aufweisen,
das andere Paar zweite Arme (4), die linear über den mittigen Trägerabschnitt (6) verbunden sind, Erfassungsabschnitte (19, 20) zum Erfassen von Verbiegungen der zweiten Arme (4) an ihren ersten Abschnitten aufweisen und
die Ansteuerabschnitte (17, 18) und Erfassungsabschnitte (19, 20) jeweils aus einer oberen Elektrode und einer unteren Elektrode mit einem dazwischen angeordneten piezoelektrischen Körper gebildet sind.

3. Trägheitskraftsensor nach Anspruch 1, bei dem
eines der Paare zweiter Arme (4), die linear über den mittigen Trägerabschnitt (6) verbunden sind, Ansteuerabschnitte (17, 18) zum Ansteuern und Vibrierenlassen der Gewichtsteile (11) und Erfassungsabschnitte (19, 20) zum Erfassen von Verbiegungen der zweiten Arme (4) an ihren ersten Abschnitten aufweisen und
die Ansteuerabschnitte (17, 18) und Erfassungsabschnitte (19, 20) jeweils aus einer oberen Elektrode und einer unteren Elektrode mit einem dazwischen angeordneten piezoelektrischen Körper gebildet sind.

## Revendications

1. Capteur de force d'inertie comprenant :
un élément de détection planaire (1), pour détecter une force d'inertie, l'élément de détection (1) comportant :
deux bras de fixation (8), ayant chacun un troisième bras (10), dont chacun comprend des parties de fixation (9), qui peuvent être fixées sur un substrat de montage, un au niveau de chaque extrémité dudit troisième bras (10), chacun desdits bras de fixation (8), comportant en outre un premier bras (2), qui est relié de manière perpendiculaire, avec l'une de ses extrémités, au troisième bras respectif (10) à un emplacement situé essentiellement au milieu de chaque bras respectif desdits troisièmes bras (10) et, avec son autre extrémité, à une partie de support centrale (6),
lesdits troisièmes bras (10) s'étendant dans une première direction (Y) de deux directions perpendiculaires définissant ledit plan (X-Y) et ledit premier bras (2) s'étendant dans l'autre direction (X) desdites deux directions perpendiculaires,
lesdits premiers bras (2) étant agencés, avec ladite partie de support centrale (6) entre eux, dans une ligne droite perpendiculaire auxdits troisièmes bras (10),
ledit élément de support central (6) étant en outre relié à deux paires de deuxièmes bras (4) opposées l'une à l'autre, ayant chacune des premières parties s'étendant à l'écart dudit élément de support central (6) dans ladite première direction (Y) ou en face de celle-ci et étant pliée, respectivement, en formant une deuxième partie s'étendant de ladite première partie de chaque deuxième bras dans ladite autre direction (X), lesdits deuxièmes bras (4) étant essentiellement de nouveau pliés en formant des troisièmes parties (16), s'étendant en parallèle auxdites premières parties, et vers lesdits premiers bras (2), de sorte que les deux deuxièmes bras de chacune des paires soient symétriques par rapport à un plan normal à l'autre direction (X) et passant à travers le centre de la partie de support
lesdites troisièmes parties (16) de chacun desdits deuxièmes bras (4) étant reliées à l'une de quatre parties de poids (11),
**caractérisé en ce que**
chacune des quatre parties de poids (11) est en forme essentiellement rectangulaire sur le plan (X-Y), un côté de la forme rectangulaire possède un évidement (12) de forme essentiellement rectangulaire ayant une profondeur, et chacune des troisièmes parties (16) est reliée à un fond de l'évidement (12), et
D/L est dans une plage de 0,25 à 0,4
où D est une profondeur de l'évidement (12) et L est une distance entre le côté de la partie de poids (11) où l'évidement (12) est formé, et un côté de la partie de poids (11) qui s'opposé au côté où l'évidement (12) est formé.

2. Capteur de force d'inertie de la revendication 1, dans lequel
l'une des paires de deuxièmes bras (4) reliée de manière linéaire par l'intermédiaire de la partie de support centrale (6) comporte des parties d'entraînement (17, 18) pour entraîner et faire vibrer les parties de poids (11) au niveau de leurs premières parties,
l'autre paire de deuxièmes bras (4) reliée de manière linéaire par l'intermédiaire de la section de support centrale (6) comporte des parties de détection (19, 20) pour détecter des distorsions des deuxièmes bras (4) au niveau de leurs premières parties ; et
les parties d'entraînement (18, 17) et les parties de détection (19, 20) sont chacune formées d'une électrode supérieure et d'une électrode inférieure avec un corps piézoélectrique interposé entre elles.

3. Capteur de force d'inertie de la revendication 1, dans lequel
l'une des paires de deuxièmes bras (4) reliée de manière linéaire par l'intermédiaire de la partie de support centrale (6) comporte des parties d'entraînement (17, 18) pour entraîner et faire vibrer les parties de poids (11) et les parties de détection (19, 20) pour détecter des distorsions des deuxièmes bras (4) au niveau de leurs premières parties ; et
les parties d'entraînement (17, 18) et les parties de détection (19, 20) sont chacune formées d'une électrode supérieure et d'une électrode inférieure avec un corps piézoélectrique interposé entre elles.
